(19) Europäisches Patentamt
European Patent Office
Office européen des brevets

(11) **EP 0 899 240 B1**

(12) **FASCICULE DE BREVET EUROPEEN**

(45) Date de publication et mention
de la délivrance du brevet:
**20.02.2002 Bulletin 2002/08**

(51) Int Cl.⁷: **C02F 1/78**, C02F 1/66,
C02F 9/00, G05D 21/00

(21) Numéro de dépôt: **98402070.1**

(22) Date de dépôt: **17.08.1998**

(54) **Procédé et dispositif de traitement de l'eau par injection d'ozone et de dioxyde de carbone**

Verfahren und Vorrichtung zur Wasserbehandlung durch Einspritzung von Ozon und Kohlendioxid

Process and device for water treatment by injecting ozone and carbon dioxide

(84) Etats contractants désignés:
**AT BE CH DE DK ES FI FR GB GR IE IT LI LU NL PT SE**

(30) Priorité: **20.08.1997 FR 9710503**

(43) Date de publication de la demande:
**03.03.1999 Bulletin 1999/09**

(73) Titulaire: **Air Lquide Santé (International)**
**75007 Paris (FR)**

(72) Inventeurs:
• **Kerchouche, Kera**
**93400 Saint Ouen (FR)**
• **Boisdon, Vincent**
**78600 Maisons Laffitte (FR)**

(74) Mandataire: **Le Moenner, Gabriel**
**L'Air Liquide S.A., DSPI, Service Brevets et**
**Marques, 75 Quai d'Orsay**
**75321 Paris Cedex 07 (FR)**

(56) Documents cités:
**EP-A- 0 567 860       EP-A- 0 701 972**
**WO-A-95/13989        DE-A- 4 428 147**
**US-A- 5 609 766**

• **PATENT ABSTRACTS OF JAPAN vol. 018, no. 456 (C-1242), 25 août 1994 & JP 06 142662 A (ISHIKAWAJIMA HARIMA HEAVY IND CO LTD), 24 mai 1994**

## Description

La présente invention se rapporte à un procédé et à un dispositif de traitement de l'eau circulant dans une canalisation, laquelle eau véhicule des micro-organismes devant être éliminés et des ions susceptibles de conduire à une formation de tartre sur la paroi interne de ladite canalisation.

Il est connu de soumettre de l'eau circulant dans une canalisation ou un réseau de canalisation, à un traitement destiné à la désinfecter, c'est-à-dire à éliminer les micro-organismes qu'elle véhicule.

A cette fin, une première solution consiste à introduire dans l'eau des agents chimiques, tels du chlore ou des dérivés chlorés. Toutefois, ce type d'agents chimiques présentent plusieurs inconvénients.

En effet, une fois introduit dans l'eau, ceux-ci conduisent à la formation de sous-produits de chloration, tels des produits organo-chlorés, qui sont des substances indésirables, dont l'accumulation dans les canalisations véhiculant de l'eau destinée à la consommation humaine, est susceptible d'engendrer des problèmes de santé publique.

De plus, on a remarqué que le chlore induisait une corrosion interne des canalisations du réseau, créant ainsi des cavités dans les parois des canalisations qui favorisent le dépôt, la croissance et la propagation d'un biofilm de micro-organismes.

En outre, il a été constaté que certains germes pathogènes résistaient à l'action du chlore et de ses dérivés.

Une alternative à l'utilisation des dérivés chlorés réside dans l'utilisation de l'ozone ou d'un gaz ozoné injecté directement dans l'eau à traiter.

En effet, le fait d'envoyer de l'ozone dans une canalisation colonisée par des bactéries limite le développement de ces dernières et améliore à terme la qualité de l'eau. En d'autres termes, l'ozone permet de réduire la flore bactérienne vivante véhiculée par l'eau à un seuil inférieur à la limite des détections. Les faibles doses appliquées n'engendrent pas de formation de carbone organique dissous biodégradable (CODB), lequel sert de nutriment à la flore bactérienne; les risques de reviviscence des micro-organismes sont donc réduits.

En outre, la dégradation de l'ozone ne conduit pas à des sous-produits susceptibles de nuire à la santé publique et n'induit, par ailleurs, aucun problème de corrosion des canalisations.

Un autre problème auquel il est nécessaire de faire face, est celui de l'entartrage progressif de la paroi interne des canalisations par dépôt sur celle-ci d'ions véhiculés par l'eau. Cet entartrage est d'autant plus important que l'eau véhiculée est chaude car la température favorise le déplacement de l'équilibre calco-carbonique conduisant au dépôt de tartre.

De tels dépôts ioniques conduisant à la formation de tartre à l'intérieur des canalisations sont nuisibles car, d'une part, ils conduisent à une obturation progressive des canalisations et, d'autre part, ils favorisent et facilitent l'implantation et le développement du biofilm de micro-organismes.

Pour limiter ce phénomène d'entartrage, il est nécessaire de ramener l'eau à l'équilibre calco-carbonique, ce qui est effectué, de manière connue, par soit un rééquilibrage de l'eau en sel, soit, le cas échéant, un déplacement du pH.

Habituellement, le rééquilibrage de l'eau en sel nécessite un matériel complexe et coûteux, dont le principe de fonctionnement est basé sur la technique de l'échange d'ion, tout en requérant l'utilisation d'une quantité importante de réactif. Si cette technique permet de résoudre au moins partiellement le problème d'entartrage des canalisations, elle est aussi à l'origine d'un développement intempestif des micro-organismes.

Le déplacement du pH, et donc de l'équilibre calco-carbonique vers les pH acides, peut être effectué, quant à lui, par introduction dans l'eau à traiter d'acides forts, tels l'acide sulfurique à 97% ou l'acide chlorhydrique à 35%, ou d'acide faible. Toutefois, l'utilisation de produits acides présente plusieurs inconvénients, à savoir: leur manipulation est délicate et potentiellement dangereuse pour l'utilisateur, les acides utilisés sont une source d'ions polluants pour l'eau (ions $SO_4^{2-}$, $Cl^-$ ...), l'acidité est à l'origine d'une corrosion des canalisations, les doses ajoutées à l'eau doivent être minutieusement contrôlées afin d'éviter tout risque de sous ou sur acidification de l'eau.

Une alternative à l'utilisation d'acides ou de sels consiste en la dissolution dans l'eau à traiter de dioxyde de carbone ($CO_2$), lequel permet d'abaisser le pH de l'eau de manière efficace, aisée et stable.

De là, lorsque l'on souhaite traiter de l'eau circulant dans une canalisation, laquelle eau véhicule des micro-organismes et des ions favorisant l'entartrage de ladite canalisation, il est recommandé d'y injecter de l'ozone ($O_3$) et du dioxyde de carbone ($CO_2$). En effet, en procédant de la sorte, on assiste à une action synergique des deux gaz.

Plus précisément, l'ozone permettra d'éliminer les micro-organismes véhiculés par l'eau et le $CO_2$ empêchera ou ralentira la formation de tartre et donc le dépôt du biofilm de micro-organismes sur les parois intérieures des canalisations.

L'injection de l'ozone et du dioxyde de carbone dans l'eau à traiter peut être réalisée soit en injectant ces deux gaz indépendamment l'un de l'autre, soit en procédant à un mélange préalable de ceux-ci, on parle alors d'une injection simultanée des deux gaz.

Le domaine d'application de ce type de procédé de traitement des eaux est très vaste et concerne notamment le milieu hospitalier (lutte contre les infections nosocomiales dues aux Légionelles, aux Pseudomonas...), l'habitat collectif: protection des réseaux de canalisations contre le colmatage dû à l'entartrage et au dépôt de biofilm sur leur paroi interne, et le secteur industriel: traitement des eaux servant dans des procédés subséquents, lutte contre le colmatage des réseaux de canalisations et des échangeurs thermiques....

Jusqu'à présent de nombreux procédés décrivant un traitement de l'eau à l'aide des gaz ozone et/ou dioxyde de carbone ont été décrit et on peut citer par exemple les documents EP-A-0567860, WO95/13989, US-A-5,085,809, JP-A-04090891.

Le but de la présente invention est d'améliorer les procédés existants afin de permettre un traitement efficace et optimum de l'eau.

Plus précisément, l'objet de l'invention est un procédé basé sur une injection de dioxyde de carbone ($CO_2$) et d'ozone ($O_3$) dans des proportions variables et modulables en fonction des paramètres physico-chimiques de l'eau, tels le pH, la température et le débit.

L'invention concerne alors un procédé de traitement de l'eau circulant dans une canalisation, laquelle eau véhicule des microorganismes à éliminer et des ions susceptibles de conduire à une formation de tartre sur la paroi interne de ladite canalisation, dans lequel :

a/ on mesure au moins le débit, la température et le $pH_{(entrée)}$ de l'eau à traiter;

b/ on mesure au moins le $pH_{(sortie)}$ de l'eau traitée;

c/ on détermine un pH de consigne, à partir d'au moins un des paramètres mesurés à l'étape a/;

d/ on détermine, par comparaison du pH de consigne déterminé à l'étape c/ et du $pH_{(sortie)}$ mesuré à l'étape b/, la proportion de gaz contenant du dioxyde de carbone ($CO_2$) à injecter dans l'eau à traiter;

e/ on détermine une valeur de consigne d'ozonation, à partir d'au moins un des paramètres mesurés à l'étape a/;

f/ on détermine, en fonction de la valeur de consigne d'ozonation de l'étape e/, la proportion de gaz contenant de l'ozone ($O_3$) à injecter dans l'eau à traiter;

g/ on ajuste le pH de l'eau et on élimine au moins une partie des microorganismes qu'elle contient, en injectant dans l'eau à traiter, la proportion de gaz contenant de l'ozone déterminée à l'étape f/ et la proportion de gaz contenant du dioxyde de carbone déterminée à l'étape d/.

Selon le cas, le procédé de l'invention peut comprendre l'une ou plusieurs des caractéristiques suivantes:

- à l'étape a/, on mesure, en outre, au moins l'un des paramètres du groupe formé par le titre alcalimétrique complet (TAC) et le titre hydrotimétrique (TH);
- à l'étape b/, on mesure, en outre, au moins l'un des paramètres du groupe formé par le résiduel ozone (03D), le résiduel oxygène (02D) et le potentiel redox;
- la valeur de consigne d'ozonation est choisie dans le groupe formé par le taux de traitement (TT), le résiduel ozone (03D) et le produit CxT;
- l'injection des gaz dans l'eau à traiter est réalisée par des moyens de dissolution des gaz dans l'eau;
- après injection des gaz dans l'eau à traiter, on élimine au moins une partie des gaz non-dissouts à l'aide de moyens de séparation de gaz non-dissouts;
- on élimine les gaz non-dissouts au moyen d'un gaz vecteur, de préférence, un gaz vecteur contenant de l'azote;
- - après injection des gaz dans l'eau à traiter, on récupère les gaz non-dissouts;
- à l'étape c/, le pH de consigne est déterminé au moins à partir de la température et/ou du $pH_{(entrée)}$ de l'eau à traiter;
- à l'étape d/, on détermine la proportion de gaz contenant du dioxyde de carbone à injecter dans l'eau à traiter permettant de ramener le $pH_{(sortie)}$ à une valeur sensiblement égale au pH de consigne;
- à l'étape e/, la valeur de consigne d'ozonation est déterminée au moins à partir de la température et/ou du débit de l'eau à traiter;
- à l'étape f/, la proportion d'ozone à injecter est déterminée, en outre, à partir d'au moins un des paramètres mesurés à l'étape b/ dans l'eau traitée;
- on maintient la pression de l'eau à traiter dans la gamme $10^5$ Pa à $10^6$ Pa;
- l'injection des gaz dans l'eau est effectuée en ligne dans la canalisation principale ou dans une canalisation de dérivation reliée à ladite canalisation principale;
- l'injection des gaz est effectuée de manière continue ou séquencée et, de préférence, dans une canalisation dans laquelle l'eau à traiter circule à débit contrôlé;
- l'élimination, au moins partielle des micro-organismes contenus dans l'eau à traiter, est effectuée au sein d'un réservoir-tampon situé en aval du site d'injection du mélange principal;
- l'eau à traiter est à une température inférieure à 100°C, de préférence, comprise entre 1°C et 80°C;
- on ajuste le pH de l'eau dans la plage 6 à 8.

L'invention concerne également une installation de traitement de l'eau circulant dans une canalisation (11, 11'), pour la mise en oeuvre du procédé sus-décrit telle que définie dans les revendications 14 à 19.

De préférence, les moyens de séparation de gaz non-dissouts sont choisis parmi les colonnes à garnissage et les séparateurs gaz/liquide centrifuges.

Le procédé et/ou l'installation susmentionnés sont susceptibles d'être utilisés pour traiter de l'eau, à une température de 1°C à 80°C, circulant dans une canalisation d'un bâtiment, de préférence, d'un bâtiment hospitalier, ou dans une canalisation reliée à au moins un échangeur de chaleur.

Le taux de traitement (TT) est la quantité d'ozone injecté dans l'eau à traiter; il s'exprime en g d'ozone injecté par $m^3$ d'effluent.

Le résiduel d'ozone (O3D)) est la quantité d'ozone dissout dans l'eau à traiter; il s'exprime en g d'ozone dissout par $m^3$ d'effluent et peut être mesuré à l'aide de sondes d'ozone dissout ou par dosage chimique.

Le résiduel d'oxygène (O2D) ) est la quantité d'oxygène dissout dans l'eau à traiter; il s'exprime en g d'oxygène dissout par $m^3$ d'effluent et peut être mesuré à l'aide de sondes d'oxygène dissout.

Le rendement de transfert (RT) est la quantité de gaz réellement transféré dans l'eau; il s'exprime en % et est donné par le rapport :

$$RT = \frac{\text{quantité de gaz injecté - quantité de gaz aux évents}}{\text{quantité de gaz injecté}}$$

Le produit CxT définit la quantité d'ozone qui permet d'obtenir une élimination efficace des microorganismes, étant donné que cette élimination dépend à la fois de la concentration en ozone dissout et du temps de contact entre l'eau ozonée et les microorganismes à éliminer en fonction du volume d'eau utile du réacteur, dans lequel s'effectue cette opération. En fait, afin d'assurer un traitement efficace de l'eau, on peut être amené à modifier le produit CxT, de sorte de tenir compte du comportement hydraulique du ou des réacteurs, de l'étagement successif des réactifs.... En outre, suivant notamment la nature et du nombre des microorganismes, de la nature du désinfectant utilisé (ici l'ozone) et de la quantité d'eau à traiter, des tables de valeurs de CxT ont été établies par des organismes de recherche travaillant sur le traitement de l'eau; on peut citer par exemple le US EPA. Les valeurs de CxT données par ces tables servent au dimensionnement des réacteurs; celles-ci sont donc à la portée de l'homme du métier.

Le rééquilibrage calco-carbonique est une modification, c'est-à-dire une correction, chimique de l'eau. En fait, on trouve dans l'eau, en fonction pH et du taux de minéralisation, davantage de dioxyde de carbone sous forme de $CO_2$ libre ou sous forme de complexes $Ca(HCO_3)_2$ (bicarbonate de calcium) et $CaCO_3$. Il s'en suit que lorsque l'eau contient davantage de $CO_2$ libre, celle-ci est plus corrosive pour les canalisations. A l'inverse, lorsque l'eau contient davantage de $CO_2$ sous forme de complexes, celle-ci est plus entartrante pour les canalisations, de par une précipitation accelérée des carbonates de calcium sous forme de calcaire. Cependant, il existe toujours un pH d'équilibre pour lequel l'eau n'est ni trop corrosive, ni trop entartrante pour les canalisations. Par exemple, pour ramener une eau entrantrante à un pH d'équilibre, on peut y injecter du dioxyde de carbone afin de faire diminuer le pH est donc de minimiser ainsi la présence d'ions $CO_3^{2-}$, qui ont une forte tendance à réagir avec les cations $Ca^{2+}$ et $Mg^{2+}$ en donnant du tartre, et d'augmenter la présence d'ions $HCO_3^-$ non réactifs avec lesdits cations $Ca^{2+}$ et $Mg^{2+}$. De là, le titre alcalimétrique complet (TAC) reflète la teneur de l'eau en ions $OH^-$, $CO_3^{2-}$ et $HCO_3^-$, et le titre hydrotimétrique (TH) donne la teneur en ions $Ca^{2+}$ et $Mg^{2+}$.

L'invention va maintenant être décrite plus en détail à l'aide de modes de réalisation, illustrés sur les figures annexées.

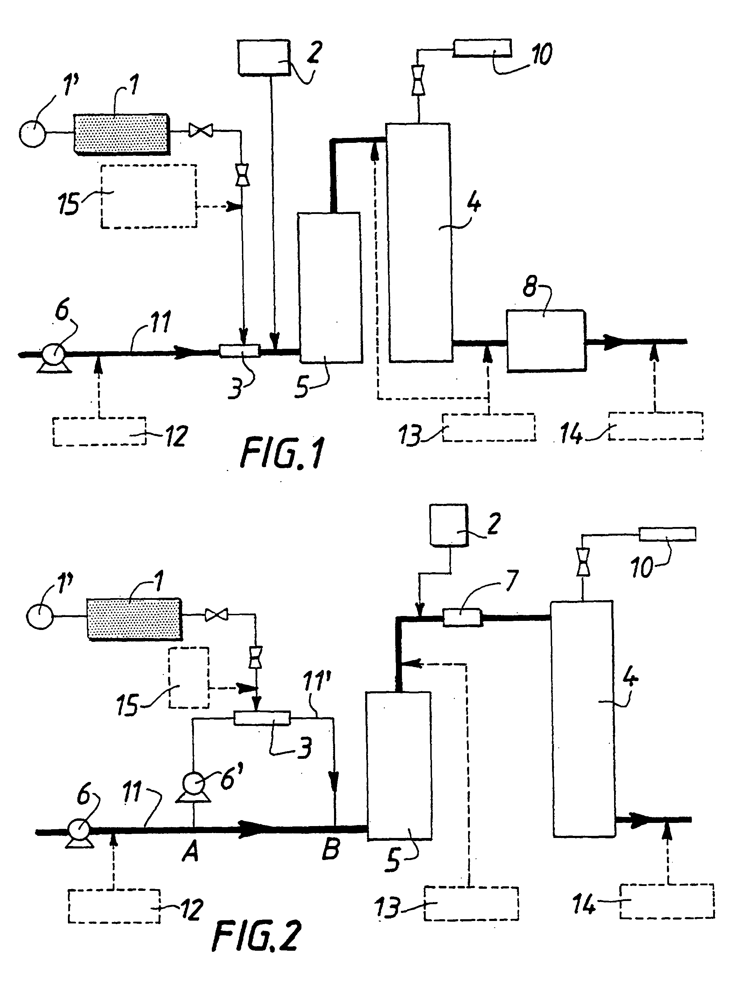

La figure 1 représente une installation en ligne de traitement de l'eau circulant dans une canalisation 11, à débit d'eau sensiblement constant, laquelle eau véhicule des micro-organismes à éliminer et des ions susceptibles de conduire à une formation de tartre sur la paroi interne de ladite canalisation; l'eau étant mise sous-pression par des moyens de compression 6.

Cette installation comprend une source 1 de gaz contenant de l'ozone ($O_3$), tel un ozoneur, alimentée en oxygène par une source d'oxygène 1', et une source 2 de dioxyde de carbone ($CO_2$). La source 1 de gaz contenant de l'ozone ou gaz ozonisé est reliée à des moyens de dissolution 3, par exemple un émulseur gaz/liquide, agencés sur la canalisation 11, lesquels permettent une meilleure dissolution du gaz ozonisé dans l'eau. Les moyens de dissolution 3 sont, par exemples, un mélangeur statique, un hydroinjecteur ou un système déprimogène de type venturi.

En outre, dans ce cas, l'injection du gaz carbonique (C02) dans l'eau est effectuée directement dans la conduite principale 11, en aval des moyens de dissolution 3.

Selon le cas, l'injection des gaz dioxyde de carbone et ozone peut être commandée soit par un seul et même module de commande, tel un automate programmable, ou soit par par des modules différents (non représentés). Il est également possible de prévoir un mode de surveillance et de contrôle global à distance de l'installation.

L'eau contenant de l'ozone et du dioxyde de carbone passe ensuite dans des moyens de contact/homogénéisation 5, tel un réacteur de contact, dans lesquels l'eau va séjourner pendant le temps nécessaire à une action efficace du dioxyde de carbone et de l'ozone dissous sur l'eau à traiter, en vue du rétablissement de l'équilibre calco-carbonique et de l'élimination des micro-organismes susceptibles de s'y trouver, puis est ensuite dirigée vers des moyens de séparation de phases 4, tel un séparateur gaz/liquide, permettant de séparer les gaz non-dissous contenus dans l'eau véhiculée par la canalisation 11, à savoir essentiellement de l'oxygène ($O_2$), du dioxyde de carbone et des résiduels ozone.

Après séparation, ces gaz non dissous soit subissent un traitement thermique ou catalytique pour en éliminer les résiduels ozone avant d'être évacués à l'atmosphère par des évents (non représentés), soit sont réutilisés dans une autre étape de traitement, ainsi l'oxygène récupéré est susceptible d'être réutilisé notamment pour produire de l'ozone.

Les moyens de séparation de phases 4 sont, par exemple, un séparateur à flux tangentiel ou un réacteur de séparation de phases avec contrôle des niveaux d'eau et de la pression sur la fuite des gaz non dissous.

Après son passage dans les moyens de séparation 4, l'eau est acheminée vers son lieu d'utilisation (non représenté), en subissant, de préférence, une étape de déozonisation chimique dans des moyens de déozonisation 8, par exemple par filtration sur charbon actif, par utilisation de récatif réducteur, tel que le bisulfite de sodium, ou par désorption des gaz non dissouts par « stripping ».

Des moyens de mesure 12, agencés en amont des moyens de dissolution 3, permettent de déterminer, en entrée, les paramètres indispensables au bon fonctionnement du procédé de l'invention : débit de l'eau à traiter, la température, le $pH_{(entrée)}$, le TAC et/ou le TH. On détermine alors à partir d'au moins un de ces paramètres:

- un pH de consigne, en général entre 6 et 8; les paramètres étant alors, de préférence, la température et/ou le $pH_{(entrée)}$ de l'eau à traiter;
- et une valeur de consigne d'ozonation choisie dans le groupe formé par le taux de traitement (TT), le résiduel ozone (03D) et le produit CxT; les paramètres étant alors, de préférence, la température et/ou le débit de l'eau à traiter, mais auss le $pH_{(sortie)}$ de l'eau traitée, le résiduel ozone (03D) et/ou le résiduel oxygène (02D), lesquels sont déterminés, en sortie, en aval des moyens de déozonisation 8, par des seconds moyens de contrôle 14.

Par comparaison du pH de consigne et du $pH_{(sortie)}$ mesuré, on détermine la proportion de gaz contenant du dioxyde de carbone ($CO_2$) à injecter dans l'eau à traiter, de sorte d'obtenir un $pH_{(sortie)}$ sensiblement égal au pH de consigne.

De même, on détermine, en fonction de la valeur de consigne d'ozonation, la proportion de gaz contenant de l'ozone à injecter dans l'eau à traiter. Ensuite, on ajuste le pH en rétablissant ainsi l'équilibre calco-carbonique de l'eau et on élimine au moins une partie des microorganismes qu'elle contient, en injectant dans l'eau à traiter, les proportions efficaces respectives de gaz contenant de l'ozone et de gaz contenant du dioxyde de carbone; l'injection de gaz étant commandée et contrôlée par des moyens de d'injection 15 de gaz.

Un contrôle complémentaire de la quantité d'ozone dissout est effectué en amont et/ou en aval des moyens de séparation 4 par des premiers moyens de contrôle 13.

De préférence, un module central de pilotage (non représenté), tel un automate programmable, commande l'ensemble de l'installation : procédure et temps d'arrêt ou de mise en marche, suivi des mesures, calcul des consignes de traitement...

L'installation représentée sur cette figure 1 peut être mise en oeuvre pour traiter les eaux chaudes, c'est-à-dire à une température entre 1 et 100°C, véhiculée par le réseau de canalisations d'un bâtiment hospitalier.

La circulation des fluides liquides et gazeux au sein de l'installation et le contrôle de la pression, pourront être réalisés de manière connue à l'aide de dispositif classique pour l'homme de l'art, tel des vannes de régulation, des clapets anti-retour, des déverseurs, des détendeurs, des capteurs de pression, de débit...

La figure 2 représente une installation de traitement de l'eau analogue à celle représentée sur la figure 1, à l'exception du fait que celle-ci n'est plus montée en ligne sur la canalisation principale 11, mais est montée en dérivation sur une canalisation de dérivation 11' (pour les parties communes : cf. figure 1); l'eau à traiter circule, dans ce cas, dans la canalisation 11 à un débit variable.

La canalisation de dérivation 11' prélève, en un point A, une partie du flux d'eau circulant dans la canalisation principale 11, achemine cette eau à traiter à travers les moyens de dissolution 3 agencés sur la canalisation de dérivation 11' et le flux d'eau ainsi ozonisé est ensuite renvoyé dans la canalisation 11, en un point B. Des moyens de compression 6' permettent de faire circuler l'eau dans la canalisation de dérivation 11'.

Selon ce mode de réalisation, l'injection de $CO_2$ est effectuée, par des moyens d'injection 2 agencés en aval des moyens de contact/homogénéisation 5; des moyens de mélanges 7 étant alors agencés en aval de ce site d'injection du dioxyde de carbone dans l'eau, mais en amont des moyens de séparation 4 de phases.

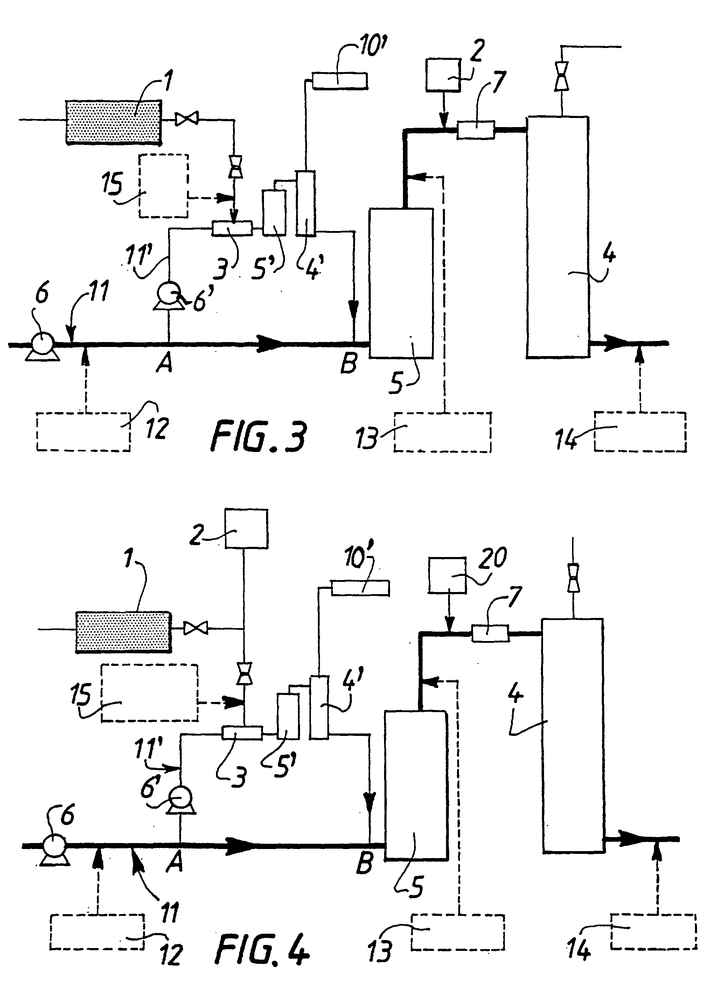

La Figure 3 représente une installation de traitement de l'eau analogue à celle représentée sur la figure 2, à l'exception du fait que celle-ci comporte, en plus, des premiers moyens de contact/homogénéisation 5' et des premiers moyens de séparation 4' de phases agencés sur la dérivation 11' et en aval des moyens de dissolution 3; les premiers moyens de séparation 4' de phases étant reliés à des moyens de destruction 10' thermique de l'ozone non-dissout.

La Figure 4 représente une installation de traitement de l'eau analogue à celle représentée sur la figure 3, à l'exception du fait que, selon ce mode de réalisation, l'ozone et le dioxyde de carbone sont injecté dans l'eau à traiter, via les moyens de dissolution 3, sous forme d'un mélange de gaz.

En outre, des moyens subsidiaires d'injection 20 de gaz, agencés en amont des moyens de mélanges 7, permettent de réaliser une injection dans l'eau d'un gaz vecteur, tel de l'oxygène, de l'azote ou de l'air, lequel gaz vecteur permet d'éliminer les gaz (en particulier l'ozone) non-dissouts.

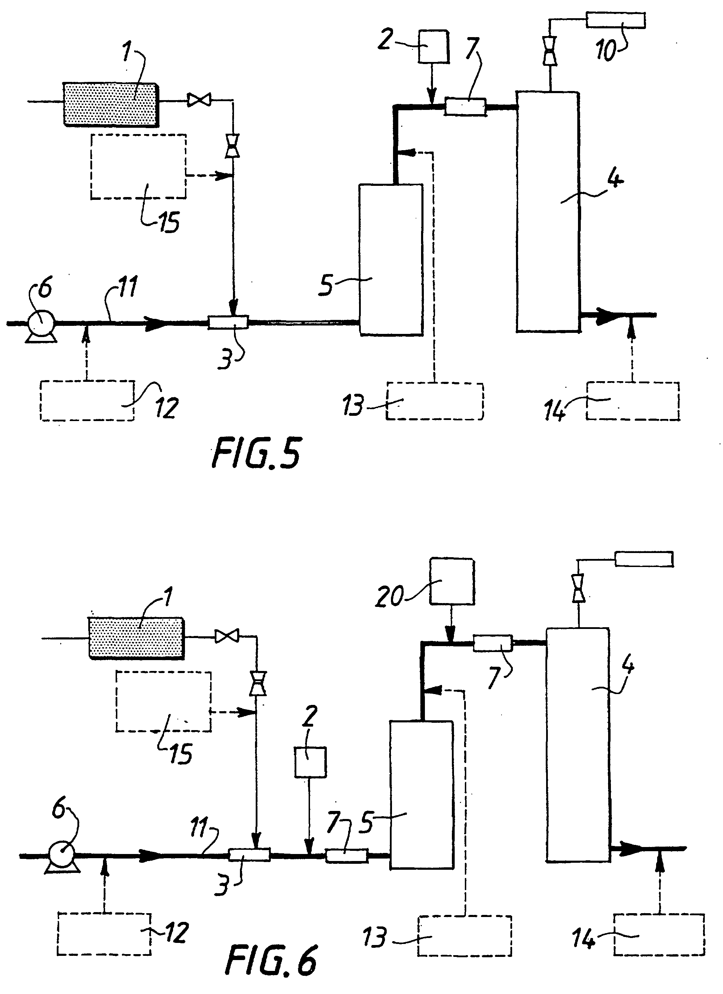

La Figure 5 représente une installation de traitement de l'eau analogue à celle représentée sur la figure 1, à l'exception du fait que, selon ce mode de réalisation, les moyens de déozonisation 8 ont été supprimés. En outre, l'injection de dioxyde de carbone se fait selon le mode de réalisation de la figure 2.

La Figure 6 représente une installation de traitement de l'eau analogue à celle représentée sur la figure 5, à l'exception du fait que, selon ce mode de réalisation, l'injection de dioxyde de carbone se fait selon le mode de réalisation de la figure 1 et que des moyens subsidiaires d'injection 20 de gaz permettent de réaliser une injection dans l'eau d'un gaz vecteur, ainsi que représenté sur la figure 4.

**Revendications**

1. Procédé de traitement de l'eau circulant dans une canalisation, laquelle eau véhicule des microorganismes à éliminer et des ions susceptibles de conduire à une formation de tartre sur la paroi interne de ladite canalisation, dans lequel :

   a/ on mesure au moins le débit, la température et le $pH_{(entrée)}$ de l'eau à traiter;
   b/ on mesure au moins le $pH_{(sortie)}$ de l'eau traitée;
   c/ on détermine un pH de consigne, à partir d'au moins un des paramètres mesurés à l'étape a/;
   d/ on détermine, par comparaison du pH de consigne déterminé à l'étape c/ et du $pH_{(sortie)}$ mesuré à l'étape b/, la proportion de gaz contenant du dioxyde de carbone ($CO_2$) à injecter dans l'eau à traiter;
   e/ on détermine une valeur de consigne d'ozonation, à partir d'au moins un des paramètres mesurés à l'étape a/;
   f/ on détermine, en fonction de la valeur de consigne d'ozonation de l'étape e/, la proportion de gaz contenant de l'ozone ($O_3$) à injecter dans l'eau à traiter;
   g/ on ajuste le pH de l'eau et on élimine au moins une partie des microorganismes qu'elle contient, en injectant dans l'eau à traiter, la proportion de gaz contenant de l'ozone déterminée à l'étape f/ et la proportion de gaz contenant du dioxyde de carbone déterminée à l'étape d/.

2. Procédé selon la revendication 1, **caractérisé en ce qu'**à l'étape a/, on mesure, en outre, au moins l'un des paramètres du groupe formé par le titre alcalimétrique complet (TAC) et le titre hydrotimétrique (TH).

3. Procédé selon l'une des revendications 1 ou 2, **caractérisé en ce qu'**à l'étape b/, on mesure, en outre, au moins l'un des paramètres du groupe formé par le résiduel ozone (03D), le résiduel oxygène (02D) et le potentiel redox.

4. Procédé selon l'une des revendications 1 à 3, **caractérisé en ce que** la valeur de consigne d'ozonation est choisie dans le groupe formé par le taux de traitement (TT), le résiduel ozone (03D) et le produit CxT.

5. Procédé selon l'une des revendications 1 à 4, **caractérisé en ce que** l'injection des gaz dans l'eau à traiter est réalisée par des moyens de dissolution des gaz dans l'eau.

6. Procédé selon l'une des revendications 1 à 5, **caractérisé en ce qu'**après injection des gaz dans l'eau à traiter, on élimine au moins une partie des gaz non-dissouts à l'aide de moyens de séparation de gaz non-dissouts.

7. Procédé selon l'une des revendications 1 à 6, **caractérisé en ce qu'**on élimine les gaz non-dissouts au moyen d'un gaz vecteur, de préférence, un gaz vecteur contenant de l'azote et/ou de l'oxygène.

8. Procédé selon l'une des revendications 1 à 7, **caractérisé en ce qu'**après injection des gaz dans l'eau à traiter, on récupère les gaz non-dissouts.

9. Procédé selon l'une des revendications 1 à 8, **caractérisé en ce qu'**à l'étape c/, le pH de consigne est déterminé au moins à partir de la température et/ou du $pH_{(entrée)}$ de l'eau à traiter.

**10.** Procédé selon l'une des revendications 1 à 9, **caractérisé en ce qu'**à l'étape d/, on détermine la proportion de gaz contenant du dioxyde de carbone à injecter dans l'eau à traiter permettant de ramener le $pH_{(sortie)}$ à une valeur sensiblement égale au pH de consigne.

**11.** Procédé selon l'une des revendications 1 à 10, **caractérisé en ce qu'**à l'étape e/, la valeur de consigne d'ozonation est déterminée au moins à partir de la température et/ou du débit de l'eau à traiter.

**12.** Procédé selon l'une des revendications 1 à 11, **caractérisé en ce qu'**à l'étape f/, la proportion d'ozone à injecter est déterminée, en outre, à partir d'au moins un des paramètres mesurés à l'étape b/ dans l'eau traitée.

**13.** Procédé selon l'une des revendications 1 à 12, **caractérisé en ce que** l'on maintient la pression de l'eau à traiter dans la gamme $10^5$ Pa.. à $10^6$ Pa.

**14.** Installation en ligne de traitement de l'eau circulant dans une canalisation (11), comprenant :

- des moyens de compression (6) agencés sur la canalisation (11),
- des moyens de dissolution (3) agencés sur la canalisation (11) en aval desdits moyens (6),
- des moyens de contact / homogénéisation (5) agencés sur la canalisation (11) en aval desdits moyens (3),
- des moyens de séparation de phase (4) agencés sur la canalisation (11) en aval desdits moyens (5),
- des moyens de déozonisation chimique (8) agencés sur la canalisation (11) en aval desdits moyens (4),
- une source (1) de gaz contenant de l'ozone, alimentée en oxygène par une source d'oxygène (1'), reliée audits moyens (3) et munie des moyens d'injection de dudit gaz (15),
- une source (2) de dioxyde de carbone reliée directement à la canalisation (11) entre lesdits moyens (3) et (5),
- des moyens de mesure (12) de débit de température de pH, de titre alcalimétrique complet et/ou de titre hydrotimétrique, agencés sur la canalisation (11) en amont desdits moyens (3), de façon à déterminer lesdits paramètres en aval desdits moyens (6),
- des premiers moyens de contrôle (13) de la quantité d'ozone dissout agencés sur la canalisation (11) de façon à effectuer ledit contrôle en amont et / ou en aval desdits moyens (4), et
- des seconds moyens de contrôle (14) de débit de températures de pH de résiduel ozone et/ou de résiduel oxygène, agencés sur la canalisation (11) de façon à déterminer lesdits paramètres en aval desdits moyens (8).

**15.** Variante de l'installation en ligne, telle que définie à la revendication 14 **caractérisée en ce que** :

- elle ne comprend pas de moyens de déozonisation chimique (8),
- elle comprend en outre des moyens de mélange (7) agencés sur la canalisation (11) en aval desdits moyens (5) et en amont des moyens de séparation de phase (4),
- la source (2) de dioxyde de carbone est reliée à la canalisation (11) entre lesdits moyens (5) et (7).
- les premiers moyens de contrôle (13) sont agencés sur la canalisation (11) de façon à effectuer ledit contrôle en aval desdits moyens (5) et en amont du point d'injection du dioxyde de carbone, et **en ce que**
- les seconds moyens de contrôle (14) sont agencés sur la canalisation (11) de façon à déterminer lesdits paramètres en aval desdits moyens (4).

**16.** Variante de l'installation en ligne, telle que définie à la revendication 14 **caractérisée en ce que** :

- elle ne comprend pas de moyens de déozonisation chimique (8),
- elle comprend en outre des premiers moyens de mélange (7), agencés sur la canalisation (11) en aval desdits moyens (3), et en amont desdits moyens (5), des seconds moyens de mélanges (7) agencés sur la canalisation (11) en aval desdits moyens (5), et en amont desdits moyens (4), des moyens subsidiaires d'injection (20) de gaz, agencés de façon à effectuer l'injection d'un gaz vecteur, dans la canalisation (11) en aval desdits moyens (5) et en amont desdits seconds moyens (7),
- la source (2) de dioxyde de carbone est reliée à la canalisation (11) entre lesdits moyens (3) et lesdits premiers moyens (7).
- les premiers moyens de contrôle (13) sont agencés sur la canalisation (11) de façon effectuer ledit contrôle en aval desdits moyens (5) et en amont du point d'injection du gaz vecteur, et **en ce que**
- les seconds moyens de contrôle (14) sont agencés sur la canalisation (11) de façon à déterminer lesdits paramètres en aval desdits moyens (4).

**17.** Installation en dérivation de traitement de l'eau circulant dans des canalisations (11) et (11'), comprenant :

- des moyens de compression (6) agencés sur la canalisation (11),
- des moyens de compression (6') agencés sur une canalisation de dérivation (11') débutant en un point A de la canalisation (11) situé en aval desdits moyens (6) et finissant en un point B de la canalisation (11) situé en aval dudit point (A),
- des moyens de dissolution (3) agencés sur la canalisation (11') en aval desdits moyens (6'),
- des moyens de contact / homogénéisation (5) agencés sur la canalisation (11) en aval dudit point B,
- des moyens de mélange (7) agencés sur la canalisation (11) en aval desdits moyens (5),
- des moyens de séparation de phase (4) agencés sur la canalisation (11) en aval desdits moyens (7),
- une source (1) de gaz contenant de l'ozone, alimentée en oxygène par une source d'oxygène (1'), reliée audits moyens (3), et munie des moyens d'injection dudit gaz (15),
- des moyens d'injection de dioxyde de carbone (2) agencés de façon à effectuer l'injection du gaz dans la canalisation (11) en aval desdits moyens (5) et en amont desdits moyens (7),
- des moyens de mesure (12) de débit de température de pH, de titre alcalimétrique complet et / ou de titre hydrotimétrique, agencés sur la canalisation (11) en amont dudit point A, de façon à déterminer lesdits paramètres en aval desdits moyens (6),
- des premiers moyens de contrôle (13) de la quantité d'ozone dissout agencés sur la canalisation (11) de façon à effectuer ledit contrôle en aval desdits moyens (5) et en amont du point d'injection du gaz carbonique,
- des seconds moyens de contrôle (14) de débit de températures de pH de résiduel ozone et/ou de résiduel oxygène, agencés sur la canalisation (11) de façon à déterminer lesdits paramètres en aval desdits moyens (4).

18. Variante de l'installation en dérivation telle que définie à la revendication 17, **caractérisée en ce qu'**elle comprend en outre :

- des premiers moyens de contact / homogénéisation (5') agencés sur la canalisation (11') en aval desdits moyens (3) et
- des premiers moyens de séparation de phase (4') reliés à des moyens de destruction thermique de l'ozone non dissout (10'), agencés sur la canalisation (11') en aval desdits moyens (5').

19. Variante de l'installation en dérivation telle que définie à la revendication 18, **caractérisée en ce que** :

- elle comprend en outre des moyens subsidiaires d'injection (20) de gaz, agencés de façon à effectuer l'injection d'un gaz vecteur, dans la canalisation (11) en aval desdits moyens (5) et en amont desdits moyens (7), et **en ce que** :

- Les deux sources (1) et (2) sont agencées de façon à permettre l'injection de l'ozone et du gaz carbonique sous forme d'un mélange de gaz, des moyens d'injection de dudit mélange de gaz (15) dans lesdits moyens (3).

20. Installations ou variantes de ces installations telles que définies à l'une des revendications 14 à 19, **caractérisées en ce que** les moyens de séparation de gaz non - dissous, sont choisis parmi les colonnes à garnissage et les séparateurs gaz /liquide centrifuges.

21. Utilisation du procédé selon l'une des revendications 1 à 13, pour traiter de l'eau à une température de 1°C à 80°C circulant dans une canalisation d'un bâtiment, de préférence, d'un bâtiment hospitalier.

22. Utilisation du procédé selon l'une des revendications 1 à 13, pour traiter de l'eau circulant dans une canalisation reliée à au moins un échangeur de chaleur.

**Patentansprüche**

1. Verfahren zur Behandlung von Wasser, das in einem Rohrleitungssystem fließt und wobei das Wasser Träger von zu eliminierenden Mikroorganismen und von Ionen ist, die wahrscheinlich zu einer Bildung von Wasserstein auf der Innenwand des Rohrleitungssystems führen, in dem:

a) man mindestens die Durchflussrate, die Temperatur und den am Eingang vorhandenen pH-Wert des zu behandelnden Wassers misst;

b) man mindestens den am Ausgang vorhandenen pH-Wert des behandelten Wassers misst;

c) man einen als Einstellgröße dienenden pH-Wert auf der Grundlage von mindestens einem der in Schritt

a) gemessenen Parameter ermittelt;

d) man durch Vergleich des als Einstellgröße dienenden pH-Werts, der in Schritt c) ermittelt wurde, mit dem am Ausgang vorhandenen pH-Wert, der in Schritt b) gemessen wurde, die Konzentration des Kohlendioxid ($CO_2$) enthaltenden Gases, welches in das zu behandelnde Wasser einzuleiten ist, ermittelt;

e) auf der Grundlage von mindestens einem der in Schritt a) gemessenen Parameter einen Bezugswert für die Ozonisierung ermittelt;

f) man in Abhängigkeit von dem Bezugswert für die Ozonisierung von Schritt e) die Konzentration des Ozon ($O_3$) enthaltenden Gases, welches in das zu behandelnde Wasser einzuleiten ist, ermittelt;

g) man den ph-Wert des Wassers einstellt und mindestens einen Teil der Mikroorganismen, die das Wasser enthält, eliminiert, indem man in das zu behandelnde Wasser das Gas, das Ozon enthält, in der in Schritt f) ermittelten Konzentration einleitet, und indem man das Gas, das Kohlendioxid enthält, in der in Schritt d) ermittelten Konzentration einleitet.

2. Verfahren nach Anspruch 1, **dadurch gekennzeichnet, dass** man in Schritt a) zusätzlich mindestens einen der Parameter der Gruppe misst, die aus dem gesamten alkalimetrischen Titer und der Gesamthärte besteht.

3. Verfahren nach einem der Ansprüche 1 und 2, **dadurch gekennzeichnet, dass** man in Schritt b) zusätzlich mindestens einen der Parameter der Gruppe misst, die aus dem restlichen Ozon (03D), dem restlichen Sauerstoff (02D) und dem Redoxpotential besteht.

4. Verfahren nach einem der Ansprüche 1 bis 3, **dadurch gekennzeichnet, dass** der Bezugswert für die Ozonisierung aus der Gruppe gewählt wird, die aus der Behandlungsrate, dem restlichen Ozon (03D) und dem Produkt aus C x T besteht.

5. Verfahren nach einem der Ansprüche 1 bis 4, **dadurch gekennzeichnet, dass** die Einleitung der Gase in das zu behandelnde Wasser durch Mittel zum Lösen der Gase in dem Wasser realisiert wird.

6. Verfahren nach einem der Ansprüche 1 bis 5, **dadurch gekennzeichnet, dass** man nach der Einleitung der Gase in das zu behandelnde Wasser mindestens einen Teil der nicht gelösten Gase mit Hilfe von Mitteln zur Trennung der nicht gelösten Gase eliminiert.

7. Verfahren nach einem der Ansprüche 1 bis 6, **dadurch gekennzeichnet, dass** man die nicht gelösten Gase mit Hilfe eines Trägergases eliminiert, und zwar vorzugsweise mit einem Trägergas, das Stickstoff und/oder Sauerstoff enthält.

8. Verfahren nach einem der Ansprüche 1 bis 7, **dadurch gekennzeichnet, dass** man nach der Einleitung der Gase in das zu behandelnde Wasser die nicht gelösten Gase zurückgewinnt.

9. Verfahren nach einem der Ansprüche 1 bis 8, **dadurch gekennzeichnet, dass** in Schritt c) der als Einstellgröße dienende pH-Wert mindestens auf der Grundlage der Temperatur und/oder des am Eingang vorhandenen pH-Werts des zu behandelnden Wassers ermittelt wird.

10. Verfahren nach einem der Ansprüche 1 bis 9, **dadurch gekennzeichnet, dass** man in Schritt d) die Konzentration des Kohlendioxid enthaltenden Gases, das in das zu behandelnde Wasser eingeleitet werden soll, ermittelt, so dass es möglich ist, den am Ausgang vorhandenen pH-Wert auf einen Wert zu bringen, der im Wesentlichen gleich dem als Bezugswert dienenden pH-Wert ist.

11. Verfahren nach einem der Ansprüche 1 bis 10, **dadurch gekennzeichnet, dass** in Schritt e) der Bezugswert für die Ozonisierung mindestens auf der Grundlage der Temperatur und/oder der Durchflussrate des zu behandelnden Wassers ermittelt wird.

12. Verfahren nach einem der Ansprüche 1 bis 11, **dadurch gekennzeichnet, dass** in Schritt f) die Konzentration des einzuleitenden Ozons zusätzlich auf der Grundlage von mindestens einem der Parameter ermittelt wird, die in Schritt b) in dem behandelten Wasser gemessen worden sind.

13. Verfahren nach einem der Ansprüche 1 bis 12, **dadurch gekennzeichnet, dass** man den Druck des zu behandelnden Wassers im Bereich von $10^5$ Pa bis $10^6$ Pa hält.

14. Serielle Vorrichtung zur Behandlung von Wasser, das in einem Rohrleitungssystem (11) fließt, umfassend:

- Mittel zur Verdichtung (6), die in dem Rohrleitungssystem (11) angeordnet sind,

- Mittel zur Auflösung (3), die in dem Rohrleitungssystem (11) stromabwärts von den Mitteln (6) angeordnet sind,

- Mittel zur Herstellung des Kontakts/zur Homogenisierung (5), die in dem Rohrleitungssystem (11) stromabwärts von den Mitteln (3) angeordnet sind,

- Mittel zur Phasentrennung (4), die in dem Rohrleitungssystem (11) stromabwärts von den Mitteln (5) angeordnet sind,

- Mittel zur chemischen Deozonisierung (8), die in dem Rohrleitungssystem (11) stromabwärts von den Mitteln (4) angeordnet sind,

- eine Ozon enthaltende Gasquelle (1), die mit Sauerstoff von einer Sauerstoffquelle (1') gespeist wird, die mit den Mitteln (3) verbunden und mit Mitteln zur Einleitung des Gases (15) ausgestattet ist,

- eine Kohlendioxidquelle (2), die direkt mit dem Rohrleitungssystem (11) zwischen den Mitteln (3) und (5) verbunden ist,

- Mittel zur Messung (12) der Durchflussrate, der Temperatur, des ph-Wertes, des gesamten alkalimetrischen Titers und/oder der Gesamthärte, die in dem Rohrleitungssystem (11) stromaufwärts von den Mitteln (3) so angeordnet sind, dass die Parameter in den Mitteln (6) ermittelt werden,

- primäre Mittel zur Kontrolle (13) der Menge von gelöstem Ozon, die in dem Rohrleitungssystem (11) so angeordnet sind, dass die Kontrolle stromaufwärts und/oder stromabwärts von den Mitteln (4) durchgeführt wird, und

- sekundäre Mittel zur Kontrolle (14) der Durchflussrate, der Temperaturen, des pH-Werts, des restlichen Ozons und/oder des restlichen Sauerstoffs, die in dem Rohrleitungssystem (11) so angeordnet sind, dass die Parameter stromabwärts von den Mitteln (8) ermittelt werden.

15. Variante der seriellen Vorrichtung, so wie sie in Anspruch 14 definiert ist, **dadurch gekennzeichnet, dass**:

- sie keine Mittel zu chemischen Deozonisierung (8) umfasst,

- sie zusätzlich Mittel zum Mischen (7) umfasst, die in dem Rohrleitungssystem (11) stromabwärts von den Mitteln (5) und stromaufwärts von den Mitteln zur Phasentrennung (4) angeordnet sind,

- die Kohlendioxidquelle (2) mit dem Rohrleitungssystem (11) zwischen den Mitteln (5) und (7) verbunden ist,

- die primären Mittel zur Kontrolle (13) in dem Rohrleitungssystem (11) so angeordnet sind, dass die Kontrolle stromabwärts von den Mitteln (5) und stromaufwärts von dem Punkt für die Einleitung des Kohlendioxids durchgeführt wird, und dass

- die sekundären Mittel zur Kontrolle (14) in dem Rohrleitungssystem (11) so angeordnet sind, dass die Parameter stromabwärts von den Mitteln (4) ermittelt werden.

16. Variante der seriellen Vorrichtung, so wie sie in Anspruch 14 definiert ist, **dadurch gekennzeichnet, dass**:

- sie keine Mittel zu chemischen Deozonisierung (8) umfasst,

- sie zusätzlich primäre Mittel zum Mischen (7) umfasst, die in dem Rohrleitungssystem (11) stromabwärts von den Mitteln (3) und stromaufwärts von den Mitteln (5) angeordnet sind, sekundäre Mittel zum Mischen (7), die in dem Rohrleitungssystem (11) stromabwärts von den Mitteln (5) und stromaufwärts von den Mitteln (4) angeordnet sind, Hilfsmittel (20) zur Einleitung von Gasen, die so angeordnet sind, dass die Einleitung eines Trägergases in das Rohrleitungssystem (11) stromabwärts von den Mitteln (5) und stromaufwärts von den sekundären Mitteln (7) durchgeführt wird,

- die Kohlendioxidquelle (2) mit dem Rohrleitungssystem (11) zwischen den Mitteln (3) und den Mitteln (7) verbunden ist,

- die primären Mittel zur Kontrolle (13) in dem Rohrleitungssystem (11) so angeordnet sind, dass die Kontrolle stromabwärts von den Mitteln (5) und stromaufwärts von dem Punkt für die Einleitung des Trägergases durchgeführt wird, und dass

- die sekundären Mittel zur Kontrolle (14) in dem Rohrleitungssystem (11) so angeordnet sind, dass die Parameter stromabwärts von den Mitteln (4) ermittelt werden.

17. Parallele Vorrichtung zur Behandlung von Wasser, das in den Rohrleitungssystemen (11) und (11') fließt, umfassend:

- Mittel zur Verdichtung (6), die in dem Rohrleitungssystem (11) angeordnet sind,

- Mittel zur Verdichtung (6'), die in einem parallelen Rohrleitungssystem (11') angeordnet sind, an einem Punkt A des Rohrleitungssystems (11), der stromabwärts von den Mitteln (6) liegt, anfangen und an einem Punkt B des Rohrleitungssystems (11), der stromabwärts von dem Punkt (A) liegt, enden,

- Mittel zum Lösen (3), die in dem Rohrleitungssystem (11') stromabwärts von den Mitteln (6') angeordnet sind,

- Mittel zur Herstellung des Kontakts/zur Homogenisierung (5), die in dem Rohrleitungssystem (11) stromabwärts von dem Punkt B angeordnet sind,

- Mittel zum Mischen (7), die in dem Rohrleitungssystem (11) stromabwärts von den Mitteln (5) angeordnet sind,

- Mittel zur Phasentrennung (4), die in dem Rohrleitungssystem (11) stromabwärts von den Mitteln (7) angeordnet sind,

- eine Ozon enthaltende Gasquelle (1), die mit Sauerstoff von einer Sauerstoffquelle (1') gespeist wird und die mit den Mitteln (3) verbunden und mit Mitteln zur Einleitung des Gases (15) ausgestattet ist,

- Mittel zur Einleitung von Kohlendioxid (2), die so angeordnet sind, dass die Einleitung des Gases in das Rohrleitungssystem (11) stromabwärts von den Mitteln (5) und stromaufwärts von den Mitteln (7) durchgeführt wird,

- Mittel zur Messung (12) der Durchflussrate, der Temperatur, des ph-Wertes, des gesamten alkalimetrischen Titers und/oder der Gesamthärte, die in dem Rohrleitungssystem (11) stromaufwärts von dem Punkt A so angeordnet sind, dass die Parameter stromabwärts von den Mitteln (6) ermittelt werden,

- primäre Mittel zur Kontrolle (13) der Menge von gelöstem Ozon, die in dem Rohrleitungssystem (11) so angeordnet sind, dass die Kontrolle stromabwärts von den Mitteln (5) und stromaufwärts von dem Punkt zur Einleitung des Kohlendioxidgases durchgeführt wird,

- sekundäre Mittel zur Kontrolle (14) der Durchflussrate, der Temperaturen, des pH-Werts, des restlichen Ozons und/oder des restlichen Sauerstoffs, die in dem Rohrleitungssystem (11) so angeordnet sind, dass die Parameter stromabwärts von den Mitteln (4) ermittelt werden.

18. Variante der parallelen Vorrichtung, so wie sie in Anspruch 17 definiert ist, **dadurch gekennzeichnet, dass** sie zusätzlich umfasst:

- primäre Mittel zur Herstellung des Kontakts/zur Homogenisierung (5'), die in dem Rohrleitungssystem (11')

stromabwärts von den Mitteln (3) angeordnet sind, und

- primäre Mittel zur Phasentrennung (4'), die mit Mitteln zur thermischen Zerstörung des nicht gelösten Ozons (10') verbunden und in dem Rohrleitungssystem (11') stromabwärts von den Mitteln (5') angeordnet sind.

19. Variante der parallelen Vorrichtung, so wie sie in Anspruch 18 definiert ist, **dadurch gekennzeichnet, dass**:

- sie zusätzlich Hilfsmittel (20) zur Einleitung von Gasen umfasst, die so angeordnet sind, dass die Einleitung eines Trägergases in das Rohrleitungssystem (11) stromabwärts von den Mitteln (5) und stromaufwärts von den Mitteln (7) durchgeführt wird, und dass

- die beiden Quellen (1) und (2) so angeordnet sind, dass die Einleitung des Ozons und des Kohlendioxidgases in Form eines Gasgemisches von Mitteln zur Einleitung des Gasgemisches (15) in die Mittel (3) möglich ist.

20. Vorrichtungen oder Varianten dieser Vorrichtungen, wie sie in einem der Ansprüche 14 bis 19 definiert sind, **dadurch gekennzeichnet, dass** die Mittel zur Trennung der nicht gelösten Gase aus den Füllkörpersäulen und den Zentrifugalseparatoren für Gas/Flüssigkeit ausgewählt werden.

21. Anwendung des Verfahrens nach einem der Ansprüche 1 bis 13, um Wasser einer Temperatur von 1°C bis 80°C, das in einem Rohrleitungssystem eines Gebäudes - vorzugsweise eines Krankenhausgebäudes - zirkuliert, zu behandeln.

22. Anwendung des Verfahrens nach einem der Ansprüche 1 bis 13, um Wasser, das in einem Rohrleitungssystem zirkuliert, welches an mindestens einen Wärmetauscher angeschlossen ist, zu behandeln.

**Claims**

1. Process for treating water flowing in a line, which water conveys microorganisms to be removed and ions capable of causing scale to form on the internal wall of the said line, in which:

a) at least the flow rate, the temperature and the $pH_{(inlet)}$ of the water to be treated are measured;
b) at least the $pH_{(outlet)}$ of the treated water is measured;
c) a pH setpoint is determined from at least one of the parameters measured in step a);
d) the proportion of gas containing carbon dioxide ($CO_2$) to be injected into the water to be treated is determined by comparing the pH setpoint determined in step c) with the $pH_{(outlet)}$ measured in step b);
e) an ozonation setpoint value is determined from at least one of the parameters measured in step a);
f) the proportion of gas containing ozone ($O_3$) to be injected into the water to be treated is determined according to the ozonation setpoint value of step e); and
g) the pH of the water is adjusted and at least some of the microorganisms that it contains are removed by injecting, into the water to be treated, the proportion of gas containing ozone determined in step f) and the proportion of gas containing carbon dioxide determined in step d).

2. Process according to Claim 1, **characterized in that** at least one of the parameters from the group consisting of the complete alkalimetric titre (CAT) and the hydrotimetric titre (HT) are also measured in step a).

3. Process according to either of Claims 1 and 2, **characterized in that** at least one of the parameters from the group consisting of the ozone residual ($O_3D$), the oxygen residual ($O_2D$) and the redox potential is also measured in step b).

4. Process according to one of Claims 1 to 3, **characterized in that** the ozonation setpoint value is chosen from the group consisting of the treatment rate (TR), the ozone residual (03D) and the product CT.

5. Process according to one of Claims 1 to 4, **characterized in that** the injection of the gases into the water to be treated is carried out by means for dissolving gases in water.

6. Process according to one of Claims 1 to 5, **characterized in that**, after the gases have been injected into the water to be treated, at least some of the undissolved gases are removed by means of stripping off undissolved gases.

7. Process according to one of Claims 1 to 6, **characterized in that** the undissolved gases are removed by means of a carrier gas, preferably a carrier gas containing nitrogen and/or oxygen.

8. Process according to one of Claims 1 to 7, **characterized in that**, after the gases have been injected into the water to be treated, the undissolved gases are recovered.

9. Process according to one of Claims 1 to 8, **characterized in that** the pH setpoint is determined in step c) from at least the temperature and/or the $pH_{(inlet)}$ of the water to be treated.

10. Process according to one of Claims 1 to 9, **characterized in that**, in step d), the proportion of gas containing carbon dioxide to be injected into the water to be treated, allowing the $pH_{(outlet)}$ to be brought back to a value approximately equal to the pH setpoint, is determined.

11. Process according to one of Claims 1 to 10, **characterized in that** the ozonation setpoint value is determined in step e) from at least the temperature and/or the flow rate of the water to be treated.

12. Process according to one of Claims 1 to 11, **characterized in that** the proportion of ozone to be injected is furthermore determined in step f) from at least one of the parameters measured in step b) in the treated water.

13. Process according to one of Claims 1 to 12, **characterized in that** the pressure of the water to be treated is maintained within the $10^5$ Pa to $10^6$ Pa range.

14. In-line plant for treating water flowing in a line (11), comprising:

   - compression means (6) placed in the line (11);
   - dissolving means (3) placed in the line (11) downstream of the said means (6);
   - contacting/homogenizing means (5) placed in the line (11) downstream of the said means (3);
   - phase stripping means (4) placed in the line (11) downstream of the said means (5);
   - chemical deozonation means (8) placed in the line (11) downstream of the said means (4);
   - an ozone-containing gas source (1) fed with oxygen via an oxygen source (1'), the said source (1) being connected to the said means (3) and provided with means (15) for injecting the said gas;
   - a carbon dioxide source (2) connected directly to the line (11) between the said means (3) and the said means (5);
   - means (12) for measuring the flow rate, the temperature, the pH, the complete alkalimetric titre and/or the hydrotimetric titre, placed in the line (11) upstream of the said means (3), so as to determine the said parameters downstream of the said means (6);
   - first monitoring means (13) for monitoring the amount of dissolved ozone, placed in the line (11) so as to carry out the said monitoring upstream and/or downstream of the said means (4); and
   - second monitoring means (14) for monitoring the flow rate, temperature, pH, ozone residual and/or oxygen residual, placed in the line (11) so as to determine the said parameters downstream of the said means (8).

15. Variant of the in-line plant as defined in Claim 14, **characterized in that**:

   - it does not include chemical deozonation means (8);
   - it furthermore includes mixing means (7) placed in the line (11) downstream of the said means (5) and upstream of the phase stripping means (4);
   - the carbon dioxide source (2) is connected to the line (11) between the said means (5) and the said means (7);
   - the first monitoring means (13) are placed in the line (11) so as to carry out the monitoring downstream of the said means (5) and upstream of the point of carbon dioxide injection;

   and **in that**:

   - the second monitoring means (14) are placed in the line (11) so as to determine the said parameters downstream of the said means (4).

16. Variant of the in-line plant as defined in Claim 14, **characterized in that**:

- it does not include chemical deozonation means (8);
- it furthermore includes first mixing means (7), placed in the line (11) downstream of the said means (3), and upstream of the said means (5), second mixing means (7), placed in the line (11) downstream of the said means (5), and upstream of the said means (4), subsidiary gas injection means (20) placed so as to inject a carrier gas into the line (11) downstream of the said means (5), and upstream of the said second means (7);
- the carbon dioxide source (2) is connected to the line (11) between the said means (3) and the said first means (7);
- the first monitoring means (13) are placed in the line (11) so as to carry out the said monitoring downstream of the said means (5) and upstream of the said carrier gas injection point

and **in that**:

- the second monitoring means (14) are placed in the line (11) so as to determine the said parameters downstream of the said means (4).

17. Bypass plant for treating the water flowing in lines (11) and (11'), comprising:

- compression means (6) placed in the line (11);
- compression means (6') placed in a bypass line (11') starting from a point A on the line (11) located downstream of the said means (6) and finishing at a point B on the line (11) located downstream of the said point (A);
- dissolving means (3) placed in the line (11') downstream of the said means (6');
- contacting/homogenizing means (5) placed in the line (11) downstream of the said point B;
- mixing means (7) placed in the line (11) downstream of the said means (5);
- phase splitting means (4) placed in the line (11) downstream of the said means (7);
- an ozone-containing gas source (1) fed with oxygen via an oxygen source (1'), the said source (1) being connected to the said means (3) and provided with means (15) for injecting the said gas;
- carbon dioxide injection means (2) placed so as to inject the gas into the line (11) downstream of the said means (5), and upstream of the said means (7);
- means (12) for measuring the flow rate, the temperature, the pH, the complete alkalimetric titre and/or the hydrotimetric titre, placed in the line (11) upstream of the said point A so as to determine the said parameters downstream of the said means (6);
- first monitoring means (13) for monitoring the amount of dissolved ozone, placed in the line (11) so as to carry out the said monitoring downstream of the said means (5) and upstream of the carbon dioxide injection point;
- second monitoring means (14) for monitoring the flow rate, the temperature, the pH, the ozone residual and/or the oxygen residual, placed in the line (11) so as to determine the said parameters downstream of the said means (4).

18. Variant of the bypass plant as defined in Claim 17, **characterized in that** it furthermore includes:

- first contacting/homogenizing means (5') placed in the line (11') downstream of the said means (3); and
- first phase splitting means (4') connected to means (10') for the thermal destruction of undissolved ozone, placed in the line (11') downstream of the said means (5').

19. Variant of the bypass plant as defined in Claim 18, **characterized in that**:

- it furthermore includes subsidiary gas injection means (20) placed so as to inject a carrier gas into the line (11) downstream of the said means (5), and upstream of the said means (7);

and **in that**:

- the two sources (1) and (2) are placed so as to allow the ozone and the carbon dioxide to be injected in the form of a gas mixture by the means (15) for injecting the said gas mixture into the said means (3).

20. Plants or variants of these plants as defined in one of Claims 14 to 19, **characterized in that** the undissolved gas stripping means are chosen from packed columns and centrifugal gas/liquid separators.

21. Use of the process according to one of Claims 1 to 13 to treat water at a temperature from 1°C to 80°C flowing in a line of a building, preferably a hospital building.

22. Use of the process according to one of Claims 1 to 13 to treat water flowing in a line connected to at least one heat exchanger.

FIG.1

FIG.2

16

FIG.3

FIG.4

17

FIG.5

FIG.6